# EUROPEAN PATENT SPECIFICATION

(11) **EP 2 081 315 B1**
(45) Date of publication and mention of the grant of the patent: **13.05.2015**
(21) Application number: 08171564.1
(22) Date of filing: 27.12.2005
(51) Int. Cl.: H04L 1/16

(54) **Methods and apparatuses of transmitting feedback information using an extended subheader**
Verfahren und Vorrichtungen zur Übertragung von Rückmeldungsinformation mit einer erweiterten Zwischenunterschrift
Procédés et appareils de transmission d'informations de rétroaction à l'aide d'un sous-en-tête étendu

(30) Priority: 27.12.2004 KR 20040112927; 05.01.2005 KR 20050000930; 26.01.2005 US 647594 P; 17.03.2005 US 663347 P
(43) Date of publication of application: 22.07.2009
(62) Divisional of application: 05823592.0
(73) Proprietor: LG Electronics Inc., Seoul 150-721 (KR)
(72) Inventor: Ihm, Bin Chul, 431-749, GYEONGGI-DO (KR); Jin, Yong Suk, 431-749, GYEONGGI-DO (KR); Chun, Jin Young, 431-749, Gyeonggi-do (KR)
(74) Representative: Cabinet Plasseraud

(56) References cited:
- ANONYMOUS: "IEEE Std. 802.16-2004, IEEE Standard for Local and Metropolitan area networks; Part 16: Air Interface for Fixed Broadband Wireless Access Systems" IEEE STANDARD; IEEE, PISCATAWAY, NJ, USA, 1 October 2004 (2004-10-01), page 1,35-42,121-133,463,539-545, XP002538626
- BALACHANDRAN K ET AL: "Medium access control and radio resource management for packet data services over IS-136 channels" VEHICULAR TECHNOLOGY CONFERENCE, 1999 IEEE 49TH HOUSTON, TX, USA 16-20 MAY 1999, PISCATAWAY, NJ, USA,IEEE, US, vol. 1, 16 May 1999 (1999-05-16), pages 133-139, XP010341962 ISBN: 978-0-7803-5565-1

## Description

### Technical Field

The present invention relates to a method of transmitting feedback information, and more particularly, to a method of transmitting feedback information using an extended subheader.

### Background Art

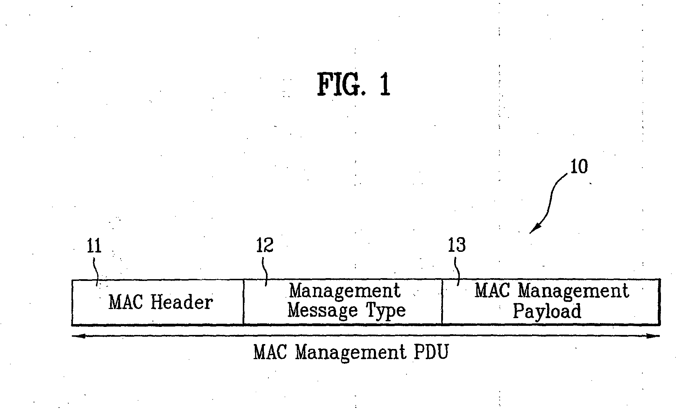

Figure 1 is an example illustrating a structure of a Medium Access Control (MAC) Protocol Data Unit (PDU). As illustrated in Figure 1, the MAC Management PDU includes a MAC Header 11, a Management Message Type 12, and a MAC Management Payload 13. Furthermore, a Bandwidth Request PDU is used by each user to dynamically request a necessary bandwidth for transmitting uplink data. The Bandwidth Request PDU is special in that it only includes the bandwidth request header and nothing else including a payload.

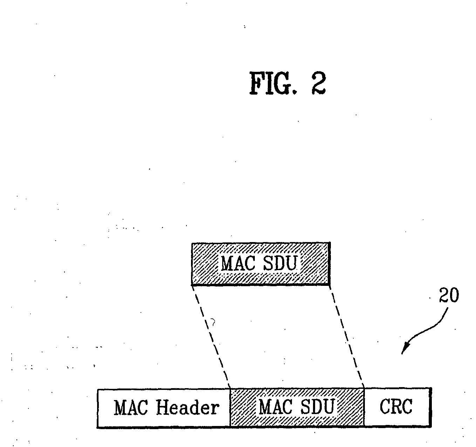

Figure 2 illustrates a structure of the MAC PDU of Figure 1. More specifically, if a MAC PDU is formed without packing or fragmenting a MAC Service Data Unit (SDU), as illustrated in Figure 2, a MAC PDU does not included a packing subheader or a fragmentation subheader.

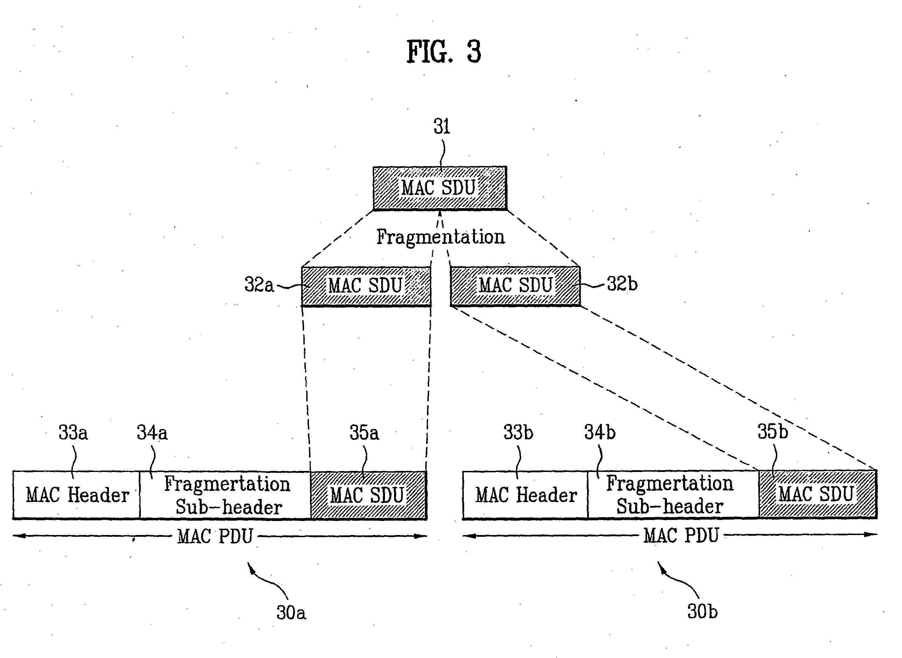

Figure 3 illustrates another example of a structure of a MAC PDU. As illustrated in Figure 3, a MAC SDU 31 is fragmented to be included in forming two or more MAC PDUs 30a and 30b. In forming the MAC PDUs 30a and 30b, fragmentation subheaders 34a and 34b are attached behind the MAC headers 33a and 33b, respectively. Moreover, MAC SDUs 35a and 35b are attached behind the fragmentation subheaders 34a and 34b, respectively, to form MAC PDUs 30a and 30b.

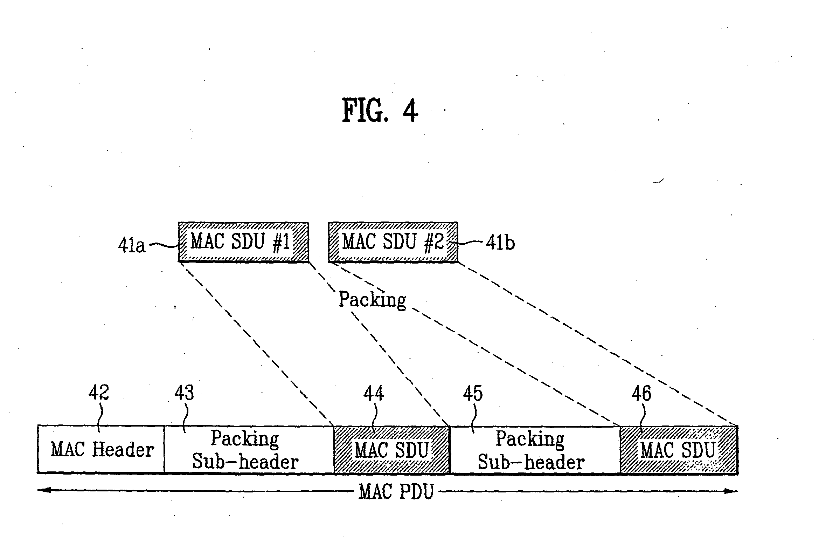

Figure 4 is yet another example illustrating a structure of a MAC PDU. In Figure 4, a MAC PDU Is formed by packing two or more MAC SDUs (e.g., MAC SDU #1 41a and MAC SDU #2 41 b). These MAC SDUs 44 and 46 are attached behind packing subheaders 43 and 46, respectively. Here, the MAC PDU has a MAC header 42 In front and more specifically, In flont of the packing subheader 43.

As described above, when the MAC SDU Is fragmented or packed, fragmentation subheader or packing subheader is attached to the respective MAC PDU(s). As such, the MAC PDU can be classified In its respective units and according to frame numbers.

In the conventional art, only the methods related to fragmenting and packing are available. In other words, the conventional art does not include a MAC PDU structure having various enhanced subheaders.

The document published by the IEEE in Piscataway NJ, USA on October 1st 2004 "IEEE std. 802.16-2004, IEEE Standard for Local and Metropolitan area networks; Part 16: Air Interface for Fixed Broadband Wireless Access Systems" discloses an example of conventional art.

### Disclosure of the Invention

Accordingly, the present invention is directed to a method of transmitting an extended subheader that substantially obviates one or more problems due to limitations and disadvantages of the related art.

An object of the present Invention Is to provide a method of receiving or transmitting an extended subheader as recited In claims 1 and 7 and corresponding apparatuses as recited in claims 13 and 14.

It is to be understood that both the foregoing general description and the following detailed description of the present invention are exemplary and explanatory and are Intended to provide further explanation of the invention as claimed.

### Brief Description of the Drawings

The accompanying drawings, which are included to provide a further understanding of the invention and are incorporated in and constitute a part of this application, illustrate embodiment(s) of the invention and together with the description serve to explain the principle of the invention. In the drawings;
FIG. 1 is an example illustrating a structure of a Medium Access Control (MAC) Protocol Data Unit (PDU);
FIG. 2 illustrates a structure of the MAC PDU of Figure 1;
FIG. 3 illustrates another example of a structure of a MAC PDU;
FIG. 4 is yet another example illustrating a structure of a MAC PDU;
FIG. 5 illustrates an example of a MAC header;
FIG. 6 is another example illustrating a MAC header;
FIG. 7 depicts an example of a MAC PDU;
FIG. 8 is a diagram depicting a structure of an extended subheader group; and
FIG. 9 is an example of an Extended Subheader Format (ESF).

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

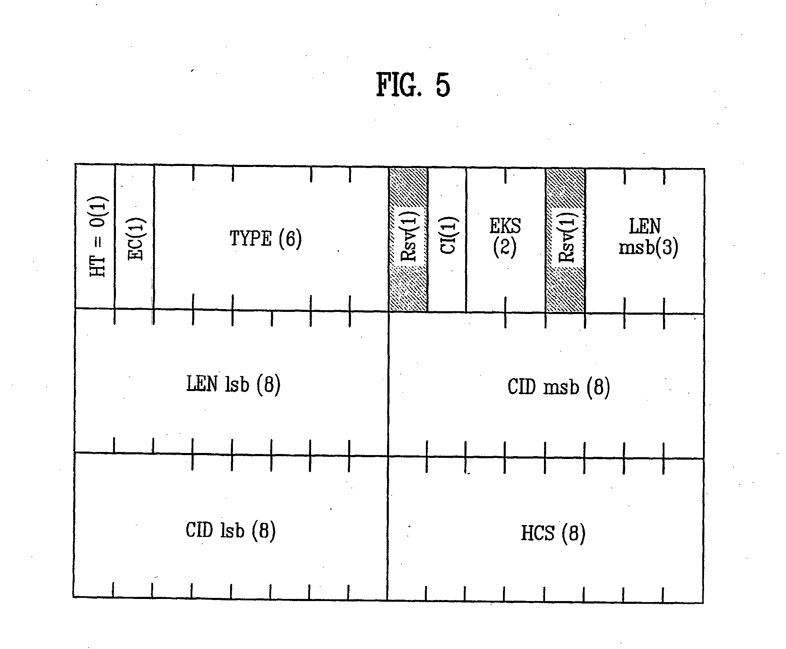

Figure 5 illustrates an example of a MAC header. As illustrated in Figure 5, the MAC header includes a 'type' field represented by 6 bits. Moreover, the 'type' field can express six (6) different types of subheaders depending on the bitmap type. These different types of subheaders can be attached behind the MAC header, and a specific type of the subheader can be indicated in the 'type' field. This type field indicates six (6) types of subheaders, and each subheader has a size of 2 bytes.

Table 1 shows an example of six (6) types of subheaders.

**[Table 1]**

| **Type bit** | **Value** |
|---|---|
| #5 Most Significant Bit (MSB) | Mesh subheader 1=present, 0=absent |
| #4 | ARQ Feedback Payload 1=present, 0=absent |
| #3 | Extended Type Indicates whether the present Packing or Fragmentation Subheaders, is Extended 1=Extended 0=Not Extended. Applicable to connections where ARQ is not enabled |
| #2 | Fragment subheader 1=present, 0=absent |
| #1 | Packing subheader 1=present, 0=absent |
| #0 Least Significant Bit (LSB) | Downlink:FAST-FEEDBACK Allocation subheader Uplink: Grant Management subheader 1=present, 0=absent |

As shown in Table 1, there are six types of subheaders, represented by a most significant bit (MSB) #5 to a least significant bit (LSB) #0. Each type of subheader can be indicated as being present or as being absent. More specifically, the type bit of '1' or '0' indicates presence or absence of the particular subheader, respectively.

For example, if the 'type' bit #5 is indicated as '1,' the MAC PDU includes a mesh subheader. That is, in a mesh mode, each mobile station (MS) is given a Node identification (Node ID) so that each MS can be identified. To this end, the mesh subheader can be used to provide Node ID to each MS. If the 'type' bit #4 is indicated as 1, then the MAC PDU includes a subheader for an Automatic Repeat Request (ARQ). If the 'type' bit #3 is indicated as 1, then the MAC PDU includes an extended packing subheader or an extended fragmentation subheader. If the 'type' bit #2 and the 'type' bit #1 are each indicated as '1,' a packet PDU corresponding to a user are mapped to a MAC SDU payload. Moreover, a MAC PDU is formed by having a MAC header and a Cyclic Redundancy Check (CRC) attached thereto.

Lastly, an application of the bit of the 'type' bit #0 is different for an uplink transmission and for a downlink transmission. If the 'type' bit #0 is indicated as '1,' the MAC PDU includes a fast-feedback allocation subheader. Here, the fast-feedback allocation subheader is positioned at the end of all subheaders. In order to receive a feedback value from the MS, the fast-feedback allocation subheader is used to allocate resource(s) in a fast feedback channel (e.g., Channel Quality Indication Channel) and the type of feedback information.

An example of a fast-feedback allocation subheader is presented in Table 2.

**[Table 2]**

| **Syntax** | **Size** | **Notes** |
|---|---|---|
| FAST-FEEDBACK allocation Subheader { | | |
| Allocation offset | 6 bits | |
| Feedback type | 2 bits | 00 : Fast DL measurement 01 : Fast MIMO feedback antenna#0 10 : Fast MIMO feedback antenna#1 11 : MIMO mode permutation mode feedback |
| } | | |

As depicted in Table 2, the fast-feedback allocation subheader uses an 'allocation offset' to allocate a Channel Quality Indication Channel (CQICH), which is indicated by a fast feedback channel Information Element (IE), for transmitting feedback information. Here, the allocation of CQICH can be represented in slots. In addition, a type of feedback information can be selected via the 'feedback type.' After the MS receives the fast-feedback allocation subheader, the MS can use the feedback value to request for a change to a Multi Input Multi Output (MIMO) mode or to a permutation mode.

For an uplink, if the 'type' bit #0 is indicated as '1,' the MAC PDU includes a Grant Management subheader. The Grant Management subheader is used to deliver information related to managing the uplink resources. Moreover, the use of the Grant Management subheader can vary depending on a subheader type. Based on the type of service, an allocation request for bandwidth using a piggyback request, bandwidth stealing scheme, and a polling scheme.

As illustrated in Figure 5, the MAC header includes two reserved bits, each having 1 bit length. Here, any one of the two reserved bits can be used to include information of an enhanced fast-feedback allocation subheader. In other words, a reserved bit can be used to indicate whether an enhanced fast-feedback allocation subheader is attached.

If the reserved bit is indicated as 1, the MAC header includes information of existence of the enhanced fast-feedback allocation subheader, and alternatively, if the reserved bit is indicated as '0,' the MAC header does not include any information on the enhanced fast-feedback allocation subheader.

Table 3 shows an example of an enhanced fast-feedback allocation subheader.

**[Table 3]**

| **Syntax** | **Size (bits)** | **Notes** |
|---|---|---|
| Enhanced Fast-feedback allocation subheader { | | |
| Allocation type | 1 | 0 = Use Fast-Feedback channel 1 = Use Feedback MAC header |
| If allocation type = 0 { | | |
| Allocation offset | 6 | Represented in slots, starting frame offset value for Fast-Feedback channel |
| CQICH_num | 4 | Number of CQICH slot(s) to be used |
| Feedback type | 3 | #0 least significant bit(LSB) ? Fast DL measurement #1 - Fast MIMO feedback, antenna #0 #2 - Fast MIMO feedback, antenna #1 #3 - Fast MIMO feedback, antenna #2 #4 - Fast MIMO feedback, antenna #3 #5 - MIMO mode and Permutation mode feedback #6 - #8 reserved |
| Frame offset | 2 | BS indicates starting frame |
| } else { | | |
| UIUC | 4 | |
| Duration | 4 | MS indicates starting frame |
| Feedback type | 4 | Refer to Table 4 |
| Frame offset | 3 | |
| } | | |

According to Table 3, the enhanced fast-feedback allocation subheader transmits a data packet to the MS. In addition, the enhanced fast-feedback allocation subheader requests for feedback on information pertaining to the transmission channel and weight value(s) of the antennas. Here, additional information can be requested such as a method of transmitting the feedback information.

In Table 3, an 'allocation type' field can be used to select a method of transmitting feedback information. For example, if the 'allocation type' field is indicated by '0,' the MS uses the fast feedback channel to transmit the feedback information. In such a case, an 'allocation offset' field is used to indicate the location of the fast feedback channel, and a 'CQICH_num' field is used to determine a number of slots to be used transmit the feedback information.

Moreover, a 'feedback type' field is used to indicate the contents of the feedback information. For example, if a BS uses two antennas, the BS can request for weight values corresponding to a first antenna and a second antenna while allocating two slots. Then the MS can send the weight value for the first antenna and the weight value for the second antenna using the allocated slots.

Furthermore, a 'frame offset' field can be used to provide information as to when the MS should send the feedback information. That is, after the MS receives the subheader, the MS can send the feedback information after a specified period or after a specified number of frames.

Alternatively, if the 'allocation type' field is indicated by '1,' the MS uses the MAC header to transmit the feedback information. Here, a 'duration' field is used to provided information regarding allocated wireless resource in the uplink, and a 'feedback type' is used to indicate the type of feedback information.

Table 4 is an example illustrating feedback information corresponding to 'feedback type' field value.

**[Table 4]**

| **Feedback Type** | **Feedback contents** | **Description** |
|---|---|---|
| 0b0000 | Set as described in table 296d | MIMO mode and permutation feedback |
| 0b0001 | DL average CQI (5bits) | 5 bits CQI feedback |
| 0b0010 | Number of index L(2bits)+MIMO coefficient (5bits. 8.4.5.4.10.6) | MIMO coefficients feedback |
| 0b0011 | Preferred-DIUC(4bits) | Preferred DL channel DIUC feedback |
| 0b0100 | UL-TX-Power(7bits) | UL transmission power |
| 0b0101 | Preferred DIUC(4bits)+UL-TX-Power(7bits)+UL-headroom(6bits) | PHY channel feedback |
| 0b0110 | Number of bands, N(2bits)+N occurrences of 'band index(6 bits) + CQI (5bits) | CQIs of multiple AMC bands |
| 0b0111 | Number of feedback types, 0(2bits)+ O occurrences of 'feedback type(4bits) + feedback content (variable)' | Multiple types of feedback |
| 0b1000-0b1111 | Reserved for future use | |

As described above, if the 'allocation type' field is indicated by '1,' the MS receives the enhanced fast-feedback allocation subheader and uses the allocated uplink wireless resources to transmit the feedback information via the MAC header.

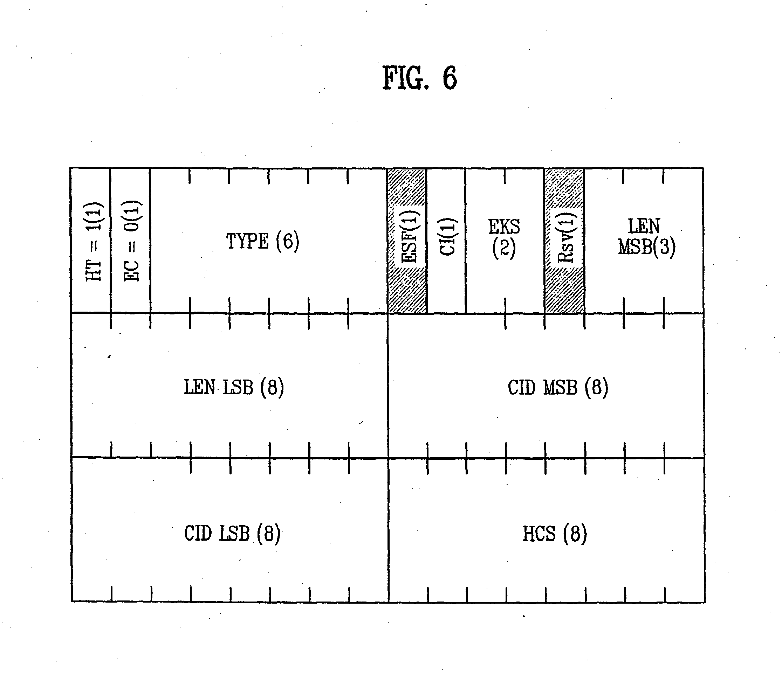

Figure 6 is another example illustrating a MAC header. As illustrated in Figure 6, the MAC header includes an Extended Subheader Format (ESF) field to further express an extended subheader group. That is, if the ESF field value is set to '1,' an extended subheader group is provided between the MAC header and six types of subheaders (immediately after the MAC header), which is expressed via a 'type' field. Hereafter, a term 'extended subheader' may be used interchangeably as a term 'extended subheader group.'

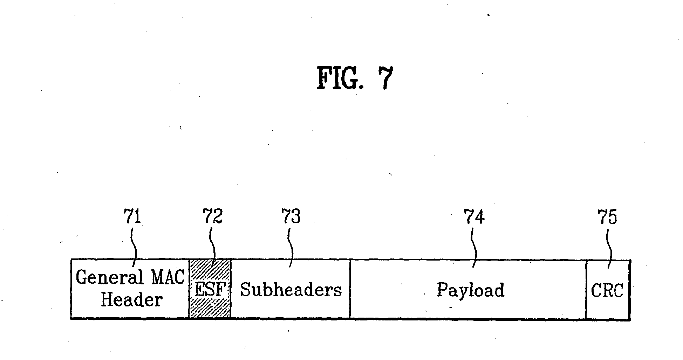

Figure 7 depicts an example of a MAC PDU. As show in this figure, the MAC PDU includes a MAC header 71, an ESF 72, subheaders 73, a payload 74, and a CRC 75. The ESF 72 can be located between the MAC header 71 and the subheaders 73, and the length of the ESF 72 can be determined based on a number of attached subheaders. Alternatively, the ESF 72 can appear or attached behind the subheaders 73.

The BS can set the value of the ESF field as '1' in the MAC header so that the MS can be notified as to the existence of the ESF between the MAC header and the subheaders. Furthermore, the ESF should not be encrypted; however, the MS can perform the error detection operation by using the CRC located at the end of the PDU.

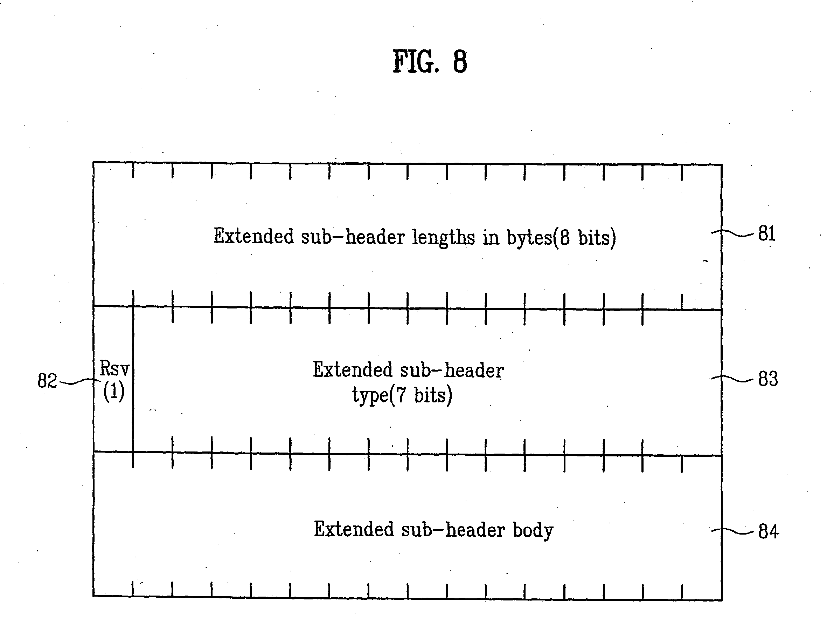

Figure 8 is a diagram depicting a structure of an extended subheader group. As depicted in Figure 8, the extended subheader group consists of an extended subheader lengths field 81 for providing a total length of the extended subheader group, a reserved bit field 82, an extended subheader type field 83, and an extended subheader body 84. Preferably, the extended subheader lengths field should be represented in 8 bits, and the total length of the extended subheader is represented in bytes. Here, the total length can be represented by maximum of 2⁷ bytes. Furthermore, there can be up to 128 types of extended subheaders.

Table 5 is an example of an extended subheader types.

**[Table 5]**

| **ESF Type value** | **Name** | **Length (bytes)** |
|---|---|---|
| 0 | New Extended subheader_1 | 1 |
| 1 | New Extended subheader_2 | 2 |
| Bits 2-127 | Reserved | |

Here, Table 5 illustrates addition of two extended subheaders. That is, based on the extended subheader type field 83, a type corresponding to '0' has an extended subheader_1 having a length of one (1) byte while a type corresponding to '1' has an extended subheader_2 having a length of two (2) bytes. Depending on the type, the extended subheader can be classified into whether the subheader is for uplink or downlink transmission. For example, a subheader used in the uplink is formed at the MS and transmitted to the BS, and if the MS receives this subheader, the MS disregards it.

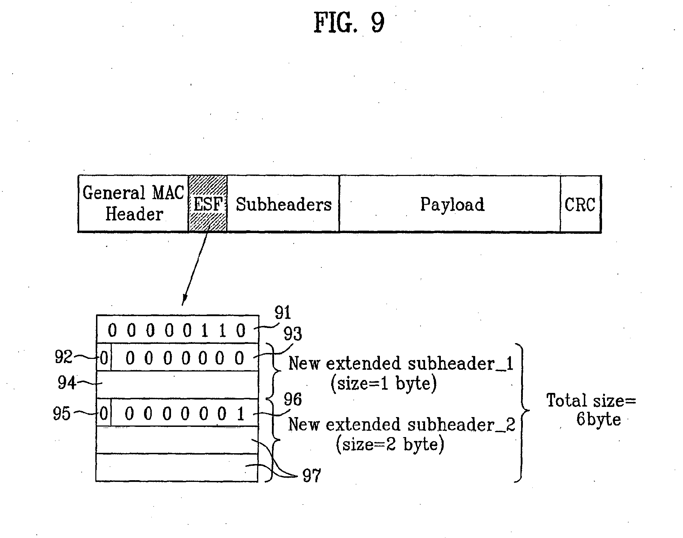

Figure 9 is an example of a format of an ESF. Here, refer to Figures 7 and 8 as well as Table 2. In Figure 9, the MAC PDU includes the extended subheader group, and an extended subheader length field 91 is used to indicate a total length of the subheader(s). In this figure, the total length of the subheaders is six (6) bytes.

In detail, a new extended subheader_1 includes a reserved bit 92 and an extended subheader type 93. Here, the extended subheader type is '0' and has a length equaling 1 byte. Moreover, a body 94 of the extended subheader contains information of a subheader represented by type '0' and having a length of 1 byte.

Furthermore, a new extended subheader_2 includes a reserved bit 95 and an extended subheader type 97. Here, the extended subheader type is '1' and has a length of 2 bytes. In a body 97 of the extended subheader_2, different from the new extended subheader_1, there are two subheaders having the length of 2 bytes.

Table 6 is an example of a downlink extended subheader attached to the MAC PDU.

**[Table 6]**

| **ESF Type value** | **Name** | **Length** |
|---|---|---|
| 0 | SDU_SN Extended subheader | 1 |
| 1 | DL Sleep control Extended subheader | 3 |
| 2 | Feedback request Extended subheader | 3 |
| 3 | PDU SN(short) Extended subheader | 1 |
| 4 | PDU SN(long) Extended subheader | 2 |
| Bits#5-127 | Reserved | |

As shown in Table 6, at least one subheader is attached to the MAC PDU before being transmitted. For example, if the ESF type field indicates a value of '00000010,' a feedback request extended subheader, having a length of 3 bits, is attached to the MAC PDU.

Table 7 is another example of an uplink extended subheader group attached to the MAC PDU.

**[Table 7]**

| **ESF Type value** | **Name** | **Length** |
|---|---|---|
| 0 | MIMO mode feedback Extended subheader | 1 |
| 1 | UL Tx power report Extended subheader | 1 |
| 2 | Mini-Feedback report Extended subheader | 2 |
| 3 | PDU SN(short) Extended Extended subheader | 1 |
| 4 | PDU SN(long) Extended subheader | 2 |
| Bits#5-127 | Reserved | |

As shown in Table 7, at least one subheader is attached to the MAC PDU before being transmitted. For example, if there is a request for MIMO mode change, a MIMO mode feedback extended subheader is transmitted after a desired mode is selected.

Table 8 is an example of a feedback request extended subheader format from an uplink extended subheader.

**[Table 8]**

| **Name** | **Size (bits)** | **Description** |
|---|---|---|
| UIUC | 4 | |
| Feedback type | 4 | Refer to Table 4 |
| OFDMA Symbol offset | 6 | The offset Is relevance to the Allocation Start Time field given in the UL-MAP message |
| Subchannel offset | 6 | The lowest Index subchannel for carrying the burst, starting from Subchannel 0. |
| No. slot | 3 | The number of slots allocated for the burst |
| Frame offset (F) | 1 | Indicate to start reporting at the frame. If F==0 the allocation applies to the UL subframe two frames ahead of the current frame. If F==1, for frames ahead of the current frame |

As depicted in Table 8, a feedback request extended subheader format can be 3 bytes in length. If the feedback request extended subheader format is transmitted to the MS, the MS transmits feedback information according to the contents of the feedback request extended subheader using the allocated uplink wireless resource. In addition, an 'OFDMA symbol offset' field and a 'subchannel offset' field provide a location of the uplink resource for feedback Information. Moreover, a 'No. slot' field indicates a number of slots allocated for the burst or a number slots to be used from a designated location. Here, a method of encoding for the feedback Information is determined using an Uplink Interval Usage Code (UIUC). Lastly, a 'frame offset' field provides a starting frame for transmitting feedback information, where the starting frame is a frame at which the feedback Information is to be begin transmitting.

## Claims

1. A method of receiving an extended subheader while communicating between entities in a mobile communication system, the method comprising:
receiving, by a base station from a mobile station, a Protocol Data Unit, PDU, including a Medium Access Channel, MAC, header, wherein the MAC header comprises a type field indicating which subheaders are attached to the PDU and an Extended Subheader Format, ESF, field indicating whether an extended subheader group is present;
determining, by the base station, whether the extended subheader group is present in the PDU from the ESF field; and
identifying, by the base station, at least one extended subheader from the extended subheader group,
wherein the extended subheader group appears immediately after the MAC header and before the subheaders,
wherein the extended subheader group includes at least one of a MIMO mode feedback extended subheader, an uplink, UL, transmission Power Report extended subheader, a mini-feedback extended subheader, a PDU SN short extended subheader and a PDU SN long extended subheader, and
wherein the type field consists of a first bit indicating whether a Grant Management subheader is present or not, a second bit indicating whether a Packing subheader is present or not, a third bit indicating whether a Fragmentation subheader is present or not, a fourth bit indicating whether the Packing subheader or the Fragmentation subheader is extended or not, a fifth bit indicating whether ARQ Feedback Payload is present or not, and a sixth bit indicating whether a Mesh subheader is present or not.

2. The method of claim 1, wherein the ESF field has a size of one bit.

3. The method of claim 1, wherein the extended subheader group includes an extended subheader group length, at least one extended subheader type, and at least one extended subheader body.

4. The method of claim 3, wherein the extended subheader group length indicates a total length of the extended subheader group.

5. The method of claim 3, wherein the extended subheader type indicates various types of extended subheaders and a length of a corresponding extended subheader.

6. The method of claim 3, wherein the extended subheader body includes the at least one the PDU SN long extended subheader, the MIMO mode feedback extended subheader, the uplink transmission power report extended subheader and the minifeedback extended subheader.

7. A method of transmitting an extended subheader while communicating between entities in a mobile communication system, the method comprising:
generating, by a mobile station, a Protocol Data Unit, PDU, including a Medium Access Channel, MAC, header, wherein the MAC header comprises a type field indicating which subhaders are attached to the PDU and an Extended Subheader Format, ESF, field indicating whether an extended subheader group is present; and
transmitting, by the mobile station to a base station, the PDU comprising the MAC header, at least one of the subheaders which is indicated by the type field, and the extended subheader group when the ESF field indicates the extended subheader is present, wherein the extended subheader group appears immediately after the MAC header before the subheaders,
wherein the extended subheader group includes at least one of a MIMO mode feedback extended subheader, an uplink, UL, Transmission Power Report extended subheader, a mini-feedback extended subheader, a PDU SN short extended subheader and a PDU SN long extended subheader, and
wherein the type field consists of a first bit indicating whether a Grant Management subheader is present or not, a second bit indicating whether a Packing subheader is present or not, a third bit indicating whether a Fragmentation subheader is present or not, a fourth bit indicating whether the Packing subheader or the Fragmentation subheader is extended or not, a fifth bit indicating whether ARQ Feedback Payload is present or not, and a sixth bit indicating whether a Mesh subheader is present or not.

8. The method of claim 7, wherein the ESF filed has a size of one bit.

9. The method of claim 7, wherein the extended subheader group includes an extended subheader group length, at least one extended subheader type, and at least one extended subheader body.

10. The method of claim 9, wherein the extended subheader group length indicates a total length of the extended subheader group.

11. The method of claim 9, wherein the extended subheader type indicates various types of extended subheaders and a length of a corresponding extended subheader.

12. The method of claim 9, wherein the extended subheader body includes at least one of the PDU SN long extended subheader, the MIMO mode feedback extended subheader, the UL transmission power report extended subheader and the mini-feedback extended subheader.

13. A base station of a mobile communication system, the base station comprising:
means for receiving, from a mobile station, a Protocol Data Unit, PDU, including a Medium Access Channel, MAC, header, wherein the MAC header comprises a type field indicating which subheaders are attached to the PDU and an Extended Subheader Format, ESF, field indicating whether an extended subheader group is present;
means for determining whether the extended subheader group is present in the PDU from the ESF field; and
means for identifying at least one extended subheader from the extended subheader group,
wherein the extended subheader group appears immediately after the MAC header and before the subheaders,
wherein the extended subheader group includes at least one of a MIMO mode feedback extended subheader, an uplink, UL, Transmission Power Report extended subheader, a mini-feedback extended subheader, a PDU SN short extended subheader and a PDU SN long extended subheader, and
wherein the type field consists of a first bit indicating whether a Grant Management subheader is present or not, a second bit indicating whether a Packing subheader is present or not, a third bit indicating whether a Fragmentation subheader is present or not, a fourth bit indicating whether the Packing subheader or the Fragmentation subheader is extended or not, a fifth bit indicating whether ARQ Feedback Payload is present or not, and a sixth bit indicating whether a Mesh subheader is present or not.

14. A mobile station of a mobile communication system, the mobile station comprising:
means for generating a Protocol Data Unit, PDU, including a Medium Access Channel, MAC, header, wherein the MAC header comprises a type field indicating which subhaders are attached to the PDU and an Extended Subheader Format, ESF, field indicating whether an extended subheader group is present; and
means for transmitting the PDU comprising the MAC header, at least one of the subheaders which is indicated by the type field, and the extended subheader group when the ESF field indicates the extended subheader is present, wherein the extended subheader group appears immediately after the MAC header before the subheaders to a base station,
wherein the extended subheader group includes at least one of a MIMO mode feedback extended subheader, an uplink, UL, Transmission Power Report extended subheader, a mini-feedback extended subheader, a PDU SN short extended subheader and a PDU SN long extended subheader, and
wherein the type field consists of a first bit indicating whether a Grant Management subheader is present or not, a second bit indicating whether a Packing subheader is present or not, a third bit indicating whether a Fragmentation subheader is present or not, a fourth bit indicating whether the Packing subheader or the Fragmentation subheader is extended or not, a fifth bit indicating whether ARQ Feedback Payload is present or not, and a sixth bit indicating whether a Mesh subheader is present or not.

## Patentansprüche

1. Verfahren zum Empfang einer erweiterten Zwischenunterschrift bzw. Unterkopfzeile während des Kommunizierens zwischen Einheiten in einem mobilen Kommunikationssystem, umfassend:
das Empfangen einer Protokolldateneinheit (Protocol Data Unit bzw. PDU) - beinhaltend eine Medienzugriffskanal-Kopfzeile (Medium Access Channel Header bzw. MAC-Kopfzeile), wobei die MAC-Kopfzeile ein Typfeld, das anzeigt, welche Unterkopfzeilen der PDU beigefügt sind, und ein Formatfeld erweiterter Unterkopfzeilen (Extended Subheader Format Field bzw. ESF-Feld), das anzeigt, ob eine Gruppe erweiterter Unterkopfzeilen vorhanden ist, umfasst - durch eine Basisstation von einer mobilen Station;
das Bestimmen durch die Basisstation aus dem ESF-Feld, ob die Gruppe erweiterter Unterkopfzeilen in der PDU vorhanden ist; und
das Identifizieren durch die Basisstation von zumindest einer erweiterten Unterkopfzeile aus der Gruppe erweiterter Unterkopfzeilen,
wobei die Gruppe erweiterter Unterkopfzeilen unmittelbar nach der MAC-Kopfzeile und vor den Unterkopfzeilen erscheint,
wobei die Gruppe erweiterter Unterkopfzeilen zumindest eine erweiterte MIMO-Modus-Rückmeldungs-Unterkopfzeile, eine erweiterte Aufwärtsstreckenübertragungsleistungsbericht-Unterkopfzeile, eine erweiterte Minirückmeldungs-Unterkopfzeile, eine kurze erweiterte PDU-SN-Unterkopfzeile und/oder eine lange erweiterte PDU-SN-Unterkopfzeile beinhaltet, und
wobei das Typfeld aus einem ersten Bit, das anzeigt, ob eine Grant-Management-Unterkopfzeile vorhanden ist oder nicht, einem zweiten Bit, das anzeigt, ob eine Packing-Unterkopfzeile vorhanden ist oder nicht, einem dritten Bit, das anzeigt, ob eine Fragmentierungs-Unterkopfzeile vorhanden ist oder nicht, einem vierten Bit, das anzeigt, ob die Packing-Unterkopfzeile oder die Fragmentierungs-Unterkopfzeile erweitert sind oder nicht, einem fünften Bit, das anzeigt, ob ARQ-Rückmeldungsnutzdaten vorhanden sind oder nicht, und einem sechsten Bit, das anzeigt, ob eine Mesh-Unterkopfzeile vorhanden ist oder nicht, besteht.

2. Verfahren nach Anspruch 1, wobei das ESF-Feld eine Größe von einem Bit aufweist.

3. Verfahren nach Anspruch 1, wobei die Gruppe erweiterter Unterkopfzeilen eine Länge der Gruppe erweiterter Unterkopfzeilen, zumindest einen Typ der erweiterten Unterkopfzeilen und zumindest einen Körper der erweiterten Unterkopfzeilen beinhaltet.

4. Verfahren nach Anspruch 3, wobei die Länge der Gruppe erweiterter Unterkopfzeilen eine Gesamtlänge der Gruppe erweiterter Unterkopfzeilen anzeigt.

5. Verfahren nach Anspruch 3, wobei der Typ der erweiterten Unterkopfzeilen verschiedene Typen erweiterter Unterkopfzeilen und eine Länge einer entsprechenden erweiterten Unterkopfzeile anzeigt.

6. Verfahren nach Anspruch 3, wobei der Körper der erweiterten Unterkopfzeilen zumindest *die* lange erweiterte PDU-SN-Unterkopfzeile, die erweiterte MIMO-Modus-Rückmeldungs-Unterkopfzeile, die erweiterte Aufwärtsstreckenübertragungsleistungsbericht-Unterkopfzeile und/oder die erweiterte Minirückmeldungs-Unterkopfzeile beinhaltet.

7. Verfahren zur Übertragung einer erweiterten Zwischenunterschrift bzw. Unterkopfzeile während des Kommunizierens zwischen Einheiten in einem mobilen Kommunikationssystem, umfassend:
das Erzeugen einer Protokolldateneinheit (Protocol Data Unit bzw. PDU) - beinhaltend eine Medienzugriffskanal-Kopfzeile (Medium Access Channel Header bzw. MAC-Kopfzeile), wobei die MAC-Kopfzeile ein Typfeld, das anzeigt, welche Unterkopfzeilen der PDU beigefügt sind, und ein Formatfeld erweiterter Unterkopfzeilen (Extended Subheader Format Field bzw. ESF-Feld ), das anzeigt, ob eine Gruppe erweiterter Unterkopfzeilen vorhanden ist, umfasst - durch eine Mobilstation und
das Übertragen der PDU - umfassend die MAC-Kopfzeile, zumindest eine der Unterkopfzeilen, die durch das Typfeld angezeigt wird, und die Gruppe erweiterter Unterkopfzeilen, wenn das ESF-Feld anzeigt, dass die erweiterte Unterkopfzeile vorhanden ist, wobei die Gruppe erweiterter Unterkopfzeilen unmittelbar nach der MAC-Kopfzeile *und* vor den Unterkopfzeilen erscheint - durch die Mobilstation an eine Basisstation,
wobei die Gruppe erweiterter Unterkopfzeilen zumindest eine erweiterte MIMO-Modus-Rückmeldungs-Unterkopfzeile, eine erweiterte Aufwärtsstreckenübertragungsleistungsbericht-Unterkopfzeile, eine erweiterte Mini-Rückmeldungs-Unterkopfzeile, eine kurze erweiterte PDU-SN-Unterkopfzeile und/oder eine lange erweiterte PDU-SN-Unterkopfzeile beinhaltet und
wobei das Typfeld aus einem ersten Bit, das anzeigt, ob eine Grant-Management-Unterkopfzeile vorhanden ist oder nicht, einem zweiten Bit, das anzeigt, ob eine Packing-Unterkopfzeile vorhanden ist oder nicht, einem dritten Bit, das anzeigt, ob eine Fragmentierungs-Unterkopfzeile vorhanden ist oder nicht, einem vierten Bit, das anzeigt, ob die Packing-Unterkopfzeile oder die Fragmentierungs-Unterkopfzeile erweitert sind oder nicht, einem fünften Bit, das anzeigt, ob ARQ-Rückmeldungsnutzdaten vorhanden sind oder nicht, und einem sechsten Bit, das anzeigt, ob eine Mesh-Unterkopfzeile vorhanden ist oder nicht, besteht.

8. Verfahren nach Anspruch 7, wobei das ESF-Feld eine Größe von einem Bit aufweist.

9. Verfahren nach Anspruch 7, wobei die Gruppe erweiterter Unterkopfzeilen eine Länge der Gruppe erweiterter Unterkopfzeilen, zumindest einen Typ der erweiterten Unterkopfzeilen und zumindest einen Körper der erweiterten Unterkopfzeilen beinhaltet.

10. Verfahren nach Anspruch 9, wobei die Länge der Gruppe erweiterter Unterkopfzeilen eine Gesamtlänge der Gruppe erweiterter Unterkopfzeilen anzeigt.

11. Verfahren nach Anspruch 9, wobei der Typ der erweiterten Unterkopfzeilen verschiedene Typen erweiterter Unterkopfzeilen und eine Länge einer entsprechenden erweiterten Unterkopfzeile anzeigt.

12. Verfahren nach Anspruch 9, wobei der Körper der erweiterten Unterkopfzeilen zumindest die lange erweiterte PDU-SN-Unterkopfzeile, die erweiterte MIMO-Modus-Rückmeldungs-Unterkopfzeile, die erweiterte Aufwärtsstreckenübertragungsleistungsbericht-Unterkopfzeile und/oder die erweiterte Mini-Rückmeldungs-Unterkopfzeile beinhaltet.

13. Basisstation eines mobilen Kommunikationssystems, umfassend:
Mittel zum Empfangen einer Protokolldateneinheit (Protocol Data Unit bzw. PDU) - beinhaltend eine Medienzugriffskanal-Kopfzeile (Medium Access Channel Header bzw. MAC-Kopfzeile), wobei die MAC-Kopfzeile ein Typfeld, das anzeigt, welche Unterkopfzeilen der PDU beigefügt sind, und ein Formatfeld erweiterter Unterkopfzeilen (Extended Subheader Format Field bzw. ESF-Feld), das anzeigt, ob eine Gruppe erweiterter Unterkopfzeilen vorhanden ist, umfasst - von einer Mobilstation;
Mittel zum Bestimmen aus dem ESF-Feld, ob die Gruppe erweiterter Unterkopfzeilen in der PDU vorhanden ist; und
Mittel zum Identifizieren von zumindest einer erweiterten Unterkopfzeile aus der Gruppe erweiterter Unterkopfzeilen,
wobei die Gruppe erweiterter Unterkopfzeilen unmittelbar nach der MAC-Kopfzeile und vor den Unterkopfzeilen erscheint,
wobei die Gruppe erweiterter Unterkopfzeilen zumindest eine erweiterte MIMO-Modus-Rückmeldungs-Unterkopfzeile, eine erweiterte Aufwärtsstreckenübertragungsleistungsbericht-Unterkopfzeile, eine erweiterte Mini-Rückmeldungs-Unterkopfzeile, eine kurze erweiterte PDU-SN-Unterkopfzeile und/oder eine lange erweiterte PDU-SN-Unterkopfzeile beinhaltet und
wobei das Typfeld aus einem ersten Bit, das anzeigt, ob eine Grant-Management-Unterkopfzeile vorhanden ist oder nicht, einem zweiten Bit, das anzeigt, ob eine Packing-Unterkopfzeile vorhanden ist oder nicht, einem dritten Bit, das anzeigt, ob eine Fragmentierungs-Unterkopfzeile vorhanden ist oder nicht, einem vierten Bit, das anzeigt, ob die Packing-Unterkopfzeile oder die Fragmentierungs-Unterkopfzeile erweitert sind oder nicht, einem fünften Bit, das anzeigt, ob ARQ-Rückmeldungsnutzdaten vorhanden sind oder nicht, und einem sechsten Bit, das anzeigt, ob eine Mesh-Unterkopfzeile vorhanden ist oder nicht, besteht.

14. Mobilstation eines mobilen Kommunikationssystems, umfassend:
Mittel zum Erzeugen einer Protokolldateneinheit (Protocol Data Unit bzw. PDU) - beinhaltend eine Medienzugriffskanal-Kopfzeile (Medium Access Channel Header bzw. MAC-Kopfzeile), wobei die MAC-Kopfzeile ein Typfeld, das anzeigt, welche Unterkopfzeilen der PDU beigefügt sind, und ein Formatfeld erweiterter Unterkopfzeilen (Extended Subheader Format Field bzw. ESF-Feld), das anzeigt, ob eine Gruppe erweiterter Unterkopfzeilen vorhanden ist, umfasst - und
Mittel zum Übertragen der PDU - umfassend die MAC-Kopfzeile, zumindest eine der Unterkopfzeilen, die durch das Typfeld angezeigt wird, und die Gruppe erweiterter Unterkopfzeilen, wenn das ESF-Feld anzeigt, dass die erweiterte Unterkopfzeile vorhanden ist, wobei die Gruppe erweiterter Unterkopfzeilen unmittelbar nach der MAC-Kopfzeile *und* vor der Unterkopfzeile erscheint - an eine Basisstation,
wobei die Gruppe erweiterter Unterkopfzeilen zumindest eine erweiterte MIMO-Modus-Rückmeldungs-Unterkopfzeile, eine erweiterte Aufwärtsstreckenübertragungsleistungsbericht-Unterkopfzeile, eine erweiterte Mini-Rückmeldungs-Unterkopfzeile, eine kurze erweiterte PDU-SN-Unterkopfzeile und/oder eine lange erweiterte PDU-SN-Unterkopfzeile beinhaltet und
wobei das Typfeld aus einem ersten Bit, das anzeigt, ob eine Grant-Management-Unterkopfzeile vorhanden ist oder nicht, einem zweiten Bit, das anzeigt, ob eine Packing-Unterkopfzeile vorhanden ist oder nicht, einem dritten Bit, das anzeigt, ob eine Fragmentierungs-Unterkopfzeile vorhanden ist oder nicht, einem vierten Bit, das anzeigt, ob die Packing-Unterkopfzeile oder die Fragmentierungs-Unterkopfzeile erweitert sind oder nicht, einem fünften Bit, das anzeigt, ob ARQ-Rückmeldungsnutzdaten vorhanden sind oder nicht, und einem sechsten Bit, das anzeigt, ob eine Mesh-Unterkopfzeile vorhanden ist oder nicht, besteht.

## Revendications

1. Procédé de réception d'un sous-en-tête étendu tout en communiquant entre des entités dans un système de communication mobile, le procédé comprenant :
recevoir, par une station de base à partir d'une station mobile, une unité de données de protocole, PDU, comprenant un en-tête de canal d'accès au support, MAC, dans lequel l'en-tête MAC comprend un champ de type indiquant les sous-en-têtes qui sont attachés à la PDU et un champ de format de sous-en-tête étendu, ESF, indiquant si un groupe de sous-en-têtes étendus est présent ;
déterminer, par la station de base, si le groupe de sous-en-têtes étendus est présent dans la PDU à partir du champ ESF ; et
identifier, par la station de base, au moins un sous-en-tête étendu à partir du groupe de sous-en-têtes étendus,
dans lequel le groupe de sous-en-têtes étendus apparaît immédiatement après l'en-tête MAC et avant les sous-en-têtes,
dans lequel le groupe de sous-en-têtes étendus comprend au moins un d'un sous-en-tête étendu de retour de mode MIMO, d'un sous-en-tête étendu de rapport de puissance de transmission de liaison montante, UL, d'un sous-en-tête étendu de mini-retour, d'un sous-en-tête étendu de SN de PDU court et un sous-en-tête étendu de SN de PDU long, et
dans lequel le champ type est constitué d'un premier bit indiquant si un sous-en-tête de gestion d'accord est présent ou non, d'un deuxième bit indiquant si un sous-en-tête de condensation est présent ou non, d'un troisième bit indiquant si un sous-en-tête de fragmentation est présent ou non, d'un quatrième bit indiquant si le sous-en-tête de condensation ou le sous-en-tête de fragmentation est étendu ou non, d'un cinquième bit indiquant si des données de retour ARQ est présente ou non, et d'un sixième bit indiquant si un sous-en-tête de maillage est présent ou non.

2. Procédé selon la revendication 1, dans lequel le champ ESF présente une taille d'un bit.

3. Procédé selon la revendication 1, dans lequel le groupe de sous-en-têtes étendus comprend une longueur de groupe de sous-en-têtes étendus, au moins un type de sous-en-tête étendu, et au moins un corps de sous-en-tête étendu.

4. Procédé selon la revendication 3, dans lequel la longueur de groupe de sous-en-têtes étendus indique une longueur totale du groupe de sous-en-têtes étendus.

5. Procédé selon la revendication 3, dans lequel le type de sous-en-tête étendu indique divers types de sous-en-têtes étendus et une longueur d'un sous-en-tête étendu correspondant.

6. Procédé selon la revendication 3, dans lequel le corps de sous-en-tête étendu comprend l'au moins un du sous-en-tête étendu de SN de PDU long, du sous-en-tête étendu de retour de mode MIMO, du sous-en-tête étendu de rapport de puissance de transmission de liaison montante et du sous-en-tête étendu de mini-retour.

7. Procédé d'émission d'un sous-en-tête étendu tout en communiquant entre des entités dans un système de communication mobile, le procédé comprenant :
générer, par une station mobile, une unité de données de protocole, PDU, comprenant un en-tête de canal d'accès au support, MAC, dans lequel l'en-tête MAC comprend un champ type indiquant les sous-en-têtes qui sont attachés à la PDU et un champ de format de sous-en-tête étendu, ESF, indiquant si un groupe de sous-en-têtes étendus est présent ou non ; et
émettre, par la station mobile à une station de base, la PDU comprenant l'en-tête MAC, au moins un des sous-en-têtes qui est indiqué par le champ type, et le groupe de sous-en-têtes étendus lorsque le champ ESF indique que le sous-en-tête étendu est présent, dans lequel le groupe de sous-en-têtes étendus apparaît immédiatement après l'en-tête MAC avant les sous-en-têtes,
dans lequel le groupe de sous-en-têtes étendus comprend au moins un d'un sous-en-tête étendu de retour de mode MIMO, d'un sous-en-tête étendu de rapport de puissance de transmission de liaison montante, UL, d'un sous-en-tête étendu de mini-retour, d'un sous-en-tête étendu de SN de PDU court et d'un sous-en-tête étendu de SN de PDU long, et
dans lequel le champ type est constitué d'un premier bit indiquant si un sous-en-tête de gestion d'accord est présent ou non, d'un deuxième bit indiquant si un sous-en-tête de condensation est présent ou non, d'un troisième bit indiquant si un sous-en-tête de fragmentation est présent ou non, d'un quatrième bit indiquant si le sous-en-tête de condensation ou le sous-en-tête de fragmentation est étendu ou non, d'un cinquième bit indiquant si des données de retour ARQ est présente ou non, et d'un sixième bit indiquant si un sous-en-tête de maillage est présent ou non.

8. Procédé selon la revendication 7, dans lequel le champ ESF présente une taille d'un bit.

9. Procédé selon la revendication 7, dans lequel le groupe de sous-en-têtes étendus comprend une longueur de groupe de sous-en-têtes étendus, au moins un type de sous-en-tête étendu, et au moins un corps de sous-en-tête étendu.

10. Procédé selon la revendication 9, dans lequel la longueur de groupe de sous-en-têtes étendus indique une longueur totale du groupe de sous-en-têtes étendus.

11. Procédé selon la revendication 9, dans lequel le type de sous-en-tête étendu indique divers types de sous-en-têtes étendus et une longueur d'un sous-en-tête étendu correspondant.

12. Procédé selon la revendication 9, dans lequel le corps de sous-en-tête étendu comprend au moins un du sous-en-tête étendu de SN de PDU long, du sous-en-tête étendu de retour de mode MIMO, du sous-en-tête étendu de rapport de puissance de transmission d'UL et du sous-en-tête étendu de mini-retour.

13. Station de base d'un système de communication mobile, la station de base comprenant :
des moyens pour recevoir, à partir d'une station mobile, une unité de données de protocole, PDU, comprenant un en-tête de canal d'accès au support, MAC, dans laquelle l'en-tête MAC comprend un champ type indiquant les sous-en-têtes qui sont attachés à la PDU et un champ de format de sous-en-tête étendu, ESF, indiquant si un groupe de sous-en-têtes étendus est présent ou non ;
des moyens pour déterminer si le groupe de sous-en-têtes étendus est présent ou non dans la PDU à partir du champ ESF ; et
des moyens pour identifier au moins un sous-en-tête étendu à partir du groupe de sous-en-têtes étendus,
dans laquelle le groupe de sous-en-têtes étendus apparaît immédiatement après l'en-tête MAC et avant les sous-en-têtes,
dans laquelle le groupe de sous-en-têtes étendus comprend au moins un d'un sous-en-tête étendu de retour de mode MIMO, d'un sous-en-tête étendu de rapport de puissance de transmission de liaison montante, UL, d'un sous-en-tête étendu de mini-retour, d'un sous-en-tête étendu de SN de PDU court et d'un sous-en-tête étendu de SN de PDU long, et
dans laquelle le champ type est constitué d'un premier bit indiquant si un sous-en-tête de gestion d'accord est présent ou non, d'un deuxième bit indiquant si un sous-en-tête de condensation est présent ou non, d'un troisième bit indiquant si un sous-en-tête de fragmentation est présent ou non, d'un quatrième bit indiquant si le sous-en-tête de condensation ou le sous-en-tête de fragmentation est étendu ou non, d'un cinquième bit indiquant si des données de retour ARQ est présente ou non, et d'un sixième bit indiquant si un sous-en-tête de maillage est présent ou non.

14. Station mobile d'un système de communication mobile, la station mobile comprenant :
des moyens pour générer une unité de données de protocole, PDU, comprenant un en-tête de canal d'accès au support, MAC, dans laquelle l'en-tête MAC comprend un champ type indiquant les sous-en-têtes qui sont attachés à la PDU et un champ de format de sous-en-tête étendu, ESF, indiquant si un groupe de sous-en-têtes étendus est présent ou non ; et
des moyens pour émettre la PDU comprenant l'en-tête MAC, au moins un des sous-en-têtes qui est indiqué par le champ type, et le groupe de sous-en-têtes étendus lorsque le champ ESF indique que le sous-en-tête étendu est présent, dans laquelle le groupe de sous-en-têtes étendus apparaît immédiatement après l'en-tête MAC avant les sous-en-têtes, à une station de base,
dans laquelle le groupe de sous-en-têtes étendus comprend au moins un d'un sous-en-tête étendu de retour de mode MIMO, d'un sous-en-tête étendu de rapport de puissance de transmission de liaison montante, UL, d'un sous-en-tête étendu de mini-retour, d'un sous-en-tête étendu de SN de PDU court et d'un sous-en-tête étendu de SN de PDU long, et
dans laquelle le champ type est constitué d'un premier bit indiquant si un sous-en-tête de gestion d'accord est présent ou non, d'un deuxième bit indiquant si un sous-en-tête de condensation est présent ou non, d'un troisième bit indiquant si un sous-en-tête de fragmentation est présent ou non, d'un quatrième bit indiquant si le sous-en-tête de condensation ou le sous-en-tête de fragmentation est étendu ou non, d'un cinquième bit indiquant si des données de retour ARQ est présente ou non, et d'un sixième bit indiquant si un sous-en-tête de maillage est présent ou non.
